# EUROPÄISCHE PATENTSCHRIFT

(11) **EP 1 285 565 B1**
(45) Veröffentlichungstag und Bekanntmachung des Hinweises auf die Patenterteilung: **23.12.2009**
(21) Anmeldenummer: 02016540.3
(22) Anmeldetag: 24.07.2002
(51) Int. Cl.: A01D 34/00, A01D 34/73

(54) **Trenneinrichtung und Mähgerät oder Mähwerk**
Cutting device and mower or cutter
Dispositif de coupe et faucheuse ou dispositif de fauchage

(30) Priorität: 20.08.2001 DE 10139373
(43) Veröffentlichungstag der Anmeldung: 26.02.2003
(73) Patentinhaber: SABO-Maschinenfabrik GmbH, 51645 Gummersbach (DE)
(72) Erfinder: Budde, Hans-Helmut, 51674 Wiehl (DE); Herwig, Axel, 51674 Wiehl (DE)
(74) Vertreter: Magin, Ludwig Bernhard

(56) Entgegenhaltungen:
- WO-A-00/48449
- DE-A- 4 202 865
- DE-A- 19 838 738
- US-A- 5 209 052
- US-A- 5 890 354

## Beschreibung

Die Erfindung betrifft eine Trenneinrichtung nach dem Oberbegriff des Patentanspruchs 1 sowie ein Mähgerät bzw. Mähwerk.

Zur Rasenpflege werden häufig Rasenmäher verwendet, die eine oder mehrere Trenneinrichtungen in der Art von Schneidmessern aufweisen, welche Gras bzw. Vegetation abtrennen. Das abgetrennte Gut wird durch eine entsprechende Öffnung in dem Gehäuse des Rasenmähers abgegeben und auf dem gemähten Rasen abgelegt oder durch einen an die Öffnung angrenzend angeschlossenen Fangsack aufgenommen. Sowohl die auf dem Rasen abgelegten Gutabschnitte als auch die durch den Fangsack aufgenommenen müssen beseitigt bzw. entsorgt werden. Um diesem Problem entgegenzuwirken, sind Rasenmäher im Einsatz, welche eine sogenannte Mulchfunktion aufweisen, d.h. das Gras wird nicht nur abgetrennt, sondern durch speziell ausgebildete Trenneinrichtungen fein zerkleinert und auf dem gemähten Rasen abgelegt bzw. in diesen eingeblasen. Auf diese Weise entfällt nicht nur das Problem der Entsorgung, sondern die abgetrennten Pflanzenabschnitte werden dem Rasen als biologischer Dünger wieder zugeführt und wirken darüber hinaus als Feuchtigkeitsspeicher.

Die DE-A1-42 02 865 zeigt einen Rasenmäher mit einem in üblicher Weise ausgebildeten Messerbalken sowie mit einem Mulchmesser, das oberhalb des Messerbalkens angeordnet ist. Das Mulchmesser weist an in Drehrichtung voreilenden Kanten Schneiden auf, wobei die diese Schneidkanten tragenden Flächenabschnitte des Mulchmessers mit Bezug auf dessen Zentralflächenabschnitt nach oben stark abgewinkelt sind. Durch ein solches Mulchmesser wird eine starke Verwirbelung des abgeschnittenen Guts erzielt.

Die DE-A1-198 38 738 zeigt einen Messerträger für ein Rasenbearbeitungsgerät. Der als Mulchmesserbalken verwendbare Messerträger hat einen zentralen Nabenabschnitt, an dem mehrere, in Umfangsrichtung des Messerträgers beabstandete, nach außen gerichtete Tragarme zum Tragen von Schneidmessern vorgesehen sind.

Die der Erfindung zugrunde liegende Aufgabe wird darin gesehen, die Mulchwirkung bekannter Trenneinrichtungen zu verbessern.

Diese Aufgabe wird erfindungsgemäß durch die Lehre der Patentansprüche 1 bzw. 14 gelöst, wobei in den weiteren Patentansprüchen Merkmale aufgeführt sind, die die Lösung in vorteilhafter Weise weiterentwickeln.

Auf diese Weise wird eine Trenneinrichtung zur Verfügung gestellt, die derart ausgebildet ist, dass geringere Verwirbelungen des Mähguts hervorgerufen werden, welche aber trotzdem in der Art eines Gebläses wirkt, so dass eine gute Mulchwirkung erzielt wird. Dies ist insbesondere dann vorteilhaft, wenn die zu schneidende Vegetation bzw. das Gras sehr trocken ist, so dass es bei der Verwendung bekannter Trenneinrichtungen zu einer nur ungenügenden Zerkleinerung des Mähguts und somit zu unschönen Ablagerungen von nur unvollständig zerkleinerten Pflanzenabschnitten auf dem Untergrund bzw. dem bereits gemähten Rasen kommen kann. Entsprechend der vorliegenden Erfindung sind Mulcharme vorgesehen, welche bezogen auf das Trennblatt bzw. auf einen zentralen Bereich desselben nach oben gebogen bzw. abgewinkelt sind und bezogen auf die Rotationsrichtung der Trenneinrichtung von den vorauseilenden Kanten aus geneigt ist und so zu einer feinen Zerkleinerung des bereits geschnittenen Mähgutes beitragen. Es ist hierbei bezogen auf die Rotationsrichtung der Trenneinrichtung eine Neigung nach vorne möglich.

Schließen die Mulcharme und das Trennblatt bzw. die voreilenden Kanten und das Trennblatt bzw. dessen rückwärtigen Kanten gemäß der Lehre der vorliegenden Erfindung einen spitzen Winkel ein, wird in den übrigen Bereichen ein größerer Freiraum geschaffen, der einen Strom von durch das Trennblatt abgeschnittenem Gut nach oben in den Wirkungsbereich der Mulcharme begünstigt.

Da die Mulcharme auf das bereits geschnittene Gut einwirken, ist es erfindungsgemäß vorgesehen, dass sie einen geringeren Bereich überdecken als das Trennblatt bzw. dass sie einen geringeren Schneidkreis als dieses aufweisen. Insbesondere wenn die Mulcharme mit Schneiden versehen sind, wirken sie durch diese Art der Anordnung auch auf weiter in Richtung des zentralen Bereichs beschleunigtes bzw. durch das Trennblatt abgeworfenes Schnittgut, wodurch die Mulchwirkung weiter verbessert wird.

Die durch die Abwinklung entstehende Kante kann beliebig oder auch zumindest annähernd parallel zu einer gedachten Hauptachse der Trenneinrichtung bzw. des Trennblattes ausgerichtet sein. Erfindungsgemäß wird sie annähernd bzw.

im wesentlichen senkrecht zu der jeweiligen voreilenden Kante bzw. der Schneide der Mulchmesser verlaufend vorgesehen, um so die räumliche Anordnung der Mulcharme weiter zu verbessern. Eine Neigung des Mulcharms kann bei dieser Anordnung auch ohne ein Tordieren erzielt werden kann. Die erfindungsgemäße Trenneinrichtung bewirkt eine optimierte Luftverteilung, durch die sowohl ein sauberer Schnitt als auch ein ausreichend langes Verbleiben des Schnittgutes in einem Gehäuse des Mähgeräts gewährleistet wird.

Liegt der zwischen dem zentralen Bereich und den Mulcharmen eingeschlossene Winkel etwa zwischen 5° und 25°, so wirkt dies einer zu starken Verwirbelung entgegen. Als besonders günstig hat sich ein Winkel von ca. 10° erwiesen.

Ein gutes Mulchergebnis kann aufgrund einer gleichmäßigen Anordnung erzielt werden, wenn die Schneiden der Mulcharme, bei rotierender bzw. umlaufender Trenneinrichtung, zumindest im Wesentlichen einen Konus bestimmen.

Durch die Mulcharme wird eine den Mulchvorgang unterstützende Luftströmung erzeugt. Darüber hinaus tragen sie auch zu einer Zerkleinerung des Schnittgutes bei. Sind die voreilenden Kanten aber angeschliffen bzw. mit Schneiden versehen, so wird das Schnittgut noch weiter zerkleinert und nicht nur weiter verwirbelt bzw. zerschlagen, so dass ein besonders gutes Mulchergebnis erzielt wird.

Üblicherweise sind Schneiden an bekannten Trenneinrichtungen von oben angeschliffen. Eine besonders gute Zerkleinerung ergibt sich aber, wenn die Schneiden der Mulcharme von unten angeschliffen sind, insbesondere in Verbindung mit von oben angeschliffenen Schneiden der Trenneinrichtung.

Der eingeschlossene Winkel beträgt vorzugsweise zwischen 45° und 75°. Ein besonders günstiger, da insbesondere materialsparender, Zuschnitt ergibt sich aber insbesondere bei einem Winkel von etwa 60°.

Es ist denkbar, die Trenneinrichtung mehrteilig auszubilden, beispielsweise indem von dem Trennblatt separate ausgebildete Mulcharme vorgesehen sind, welche beispielsweise ein Mulchblatt bilden. Vorzugsweise ist die Trenneinrichtung aber einteilig vorgesehen. Darüber hinaus ergibt sich eine einfachere Befestigung, da nur die Trenneinrichtung und nicht zwei oder mehrere Trenn-/Mulchblätter an einer Motorwelle des Mähgeräts zu befestigen sind.

Um die Stabilität der Trenneinrichtung bzw. des Trennblattes und/oder der Mulcharme zu erzielen, können Verstärkungssicken vorgesehen sein. Hierbei handelt es sich um in das Trennblatt bzw. in die Mulcharme eingebrachte Aufwölbungen, welche sich vorzugsweise in Richtung der Länge des Trennblattes bzw. der Mulcharme erstrecken. Solche Sicken können sowohl nur auf dem Trennblatt und/oder den Mulcharmen vorgesehen sein. Vorzugsweise sind sie aber derart ausgebildet, dass sie sich von dem zentralen Bereich weg über alle genannten Bereiche erstrecken, so dass eine allgemeine Versteifung der Trenneinrichtung erzielt wird.

Üblicherweise wird eine solche Trenneinrichtung zumindest im Wesentlichen aus Metall gefertigt. Die Schneiden bzw. die Schneidkanten können hierbei direkt in das Messerblatt bzw. die Mulcharme eingeschliffen sein. Es ist aber auch möglich, an einem Grundkörper angebrachte Schneidplatten vorzusehen. Darüber hinaus ist es denkbar, eine solche Trenneinrichtung oder zumindest den genannten Grundkörper aus Kunststoff auszuführen. Auch eine Kombination von Materialien oder eine Beschichtung der Trenneinrichtung oder einzelner Bereiche der Trenneinrichtung ist möglich.

Zur Unterstützung einer Gebläsewirkung der Trenneinrichtung, können an dem Messerblatt Flügel vorgesehen sein. Durch die Erzielung einer Gebläsewirkung kann eine Art Vakuum erzeugt werden, welches liegende Vegetation bzw. Gras in den Arbeitsbereich der Trenneinrichtung bringen wie auch Pflanzenabschnitte innerhalb eines Gehäuses eines Mähgeräts halten kann, um diese einem nochmaligen oder mehrfachen Zerkleinern zugänglich zu machen. Solche Flügel können beispielsweise an sich punktsymmetrisch gegenüberliegenden Endbereichen des Trennblattes vorgesehen sein. Es ist aber auch denkbar diese oder weitere Flügel in anderen Bereichen des Trennblattes vorzusehen. Die Flügel können hierbei in das Trennblatt integriert oder als separate Bauteile ausgeführt sein, die mit dem Trennblatt (un-) lösbar verbunden sind.

Insbesondere bei einer einteiligen Ausführung der Trenneinrichtung ist es günstig, wenn das Trennblatt derart ausgebildet ist, dass sich seine Schneidkanten in einer Ebene bzw. einem Bereich unterhalb des zentralen Bereichs erstrecken, da auf diese Weise ein Abstand zwischen den Schneidkanten des Trennblattes und den voreilenden Kanten bzw. den Schneiden der Mulcharme zur Verfügung gestellt wird, der das Mulchergebnis verbessert. Darüber entsteht zwischen dem zentralen Bereich und den Schneidkanten ein Freiraum, in dem beispielsweise eine Verschraubung oder auch andere Sicherungsmittel, welche die Trenneinrichtung auf einer Motorwelle des Mähgeräts hält/halten angeordnet werden kann/können. Dies ist insbesondere bei geringen Schnitthöhen vorteilhaft, da die Schneidkanten bei einer solchen Anordnung zumindest im wesentlichen den tiefsten Punkt des Mähgeräts bilden, und so einem Eindringen der Sicherungsmittel in den Untergrund bzw. einem Beschädigen der Grasnarbe entgegengewirkt wird.

Üblicherweise erstrecken sich die Schneidkanten der Trenneinrichtung zumindest im wesentlichen parallel zu einer Hauptachse des Trennblattes. Schließen sie aber mit einer solchen einen spitzen Winkel ein, so wird ein ziehender Schnitt erzeugt, welcher einen geringeren Kraftaufwand erfordert und eine verbesserte Schnittleistung erzielt. Der Winkel kann beispielsweise zwischen 5° und 25° betragen. Besonders gute Ergebnisse wurden mit einem Winkel von etwa 15° erzielt.

Eine erfindungsgemäße Trenneinrichtung kann an handgeführten wie auch handgeschobenen Mähgeräten oder auch an Mähwerken für selbstfahrende Fahrzeuge oder an durch solche gezogenen oder geschobenen Mähwerken verwendet werden. Es kann sich hierbei um spezielle Mulchgeräte handeln, welche ein zumindest im wesentlichen geschlossenes Gehäuse aufweisen. Aber auch der Einsatz an eine oder mehrere Auswurföffnung(en) aufweisenden Mähgeräten bzw. Mähwerken ist möglich, wobei diese Auswurföffnungen zur Erzielung einer verbesserten Mulchleistung verschlossenen werden können.

In der Zeichnung ist ein nachfolgend näher beschriebenes Ausführungsbeispiel der Erfindung dargestellt. Es zeigt:
- Fig. 1: eine Seitenansicht eines Mähgeräts zur Rasen-, Garten- und Grundstückspflege, wobei ein Gehäuse des Mähgeräts teilweise aufgebrochen dargestellt ist, so dass eine im Innern des Gehäuses angeordnete Trenneinrichtung sichtbar wird,
- Fig. 2: eine Ansicht der erfindungsgemäßen Trenneinrichtung von oben betrachtet und
- Fig. 3: eine Seitenansicht der Trenneinrichtung aus Fig. 2.

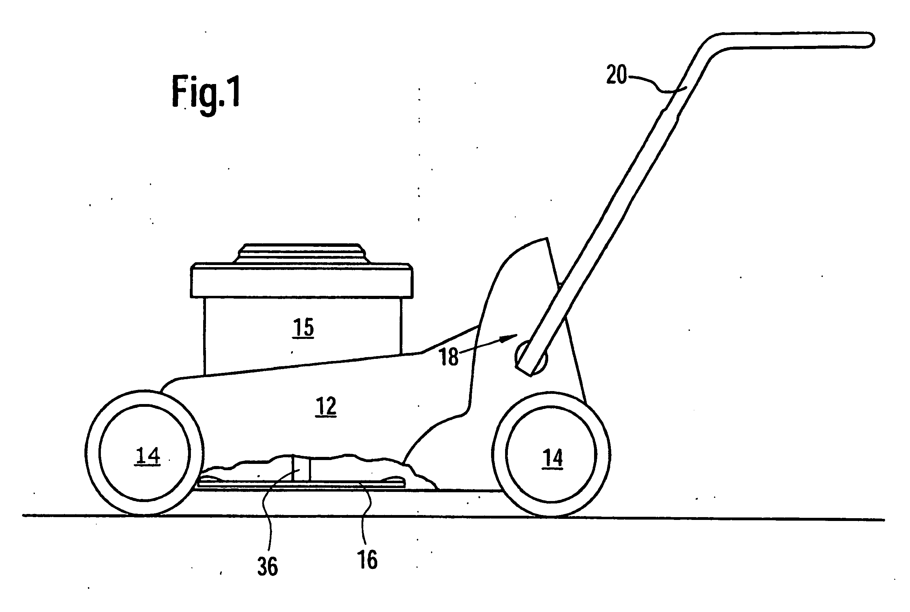

Es wird zuerst auf Fig. 1 Bezug genommen, in der ein Mähgerät 10 in der Art eines handgeführten oder auch handgeschobenen Rasenmähers gezeigt wird. Das Mähgerät 10 weist ein in Bodenrichtung geöffnetes Gehäuse 12 auf, das sich über zwei vordere und zwei rückwärtige Räder 14 auf dem Untergrund abstützt. An dem Gehäuse 12 ist ein nur andeutungsweise dargestellter Antrieb 15, beispielsweise in der Art eines Verbrennungsmotors oder auch eines Elektroantriebs vorgesehen, um ein unterhalb des Gehäuses 12 angebrachtes Mähmesser bzw. eine Trenneinrichtung 16 anzutreiben, um Gras bzw. Pflanzenwuchs zu schneiden. An dem rückwärtigen Bereich 18 des Gehäuses 12 ist ein Führungsholm 20 angebracht.

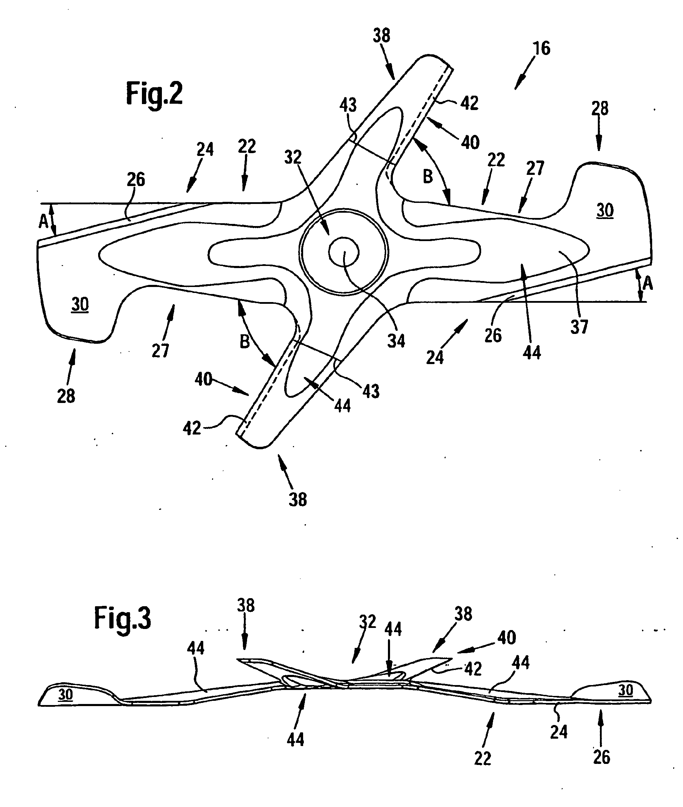

Es wird nun auf Bezug auf Fig. 2 Bezug genommen, in der die Trenneinrichtung 16 genauer dargestellt wird. Die Trenneinrichtung 16 weist einen länglich ausgebildeten Messerbalken bzw. ein Trennblatt 22 auf, welches an sich in Drehrichtung voreilenden Kanten 24 mit Schneidkanten 26 versehen ist, die sich jeweils über etwa ein Drittel der Längsausdehnung des Trennblattes 22 erstrecken und mit dem übrigen Bereich der voreilenden Kanten 24 einen Winkel A von etwa 15° bilden. Die bezogen auf die übliche Drehrichtung nacheilenden Kanten 27 sind in Ihren sich punktsymmetrisch gegenüberliegenden Endbereichen 28 in der Art von Flügeln 30 ausgebildet, welche sich in das Gehäuse 12 eingebauten Betriebszustand vom Untergrund weg nach oben erstrecken. In einem zentralen Bereich 32 ist eine Öffnung 34 vorgesehen, über die die Trenneinrichtung 16 auf eine in Fig. 1 nur andeutungsweise gezeigten Antriebswelle 36 des Mähgeräts 10 derart aufgesetzt werden kann, das sie zusammen mit dieser rotieren kann. Die über diesen zentralen Bereich 32 hinausragenden Bereiche des Trennblattes 22, welche sowohl die Schneidkanten 26 als auch die Flügel 30 tragen, sollen im folgenden als Trennarme 37 bezeichnet werden.

Von dem zentralen Bereich 32 erstrecken sich zwei Mulcharme 38 von dem Trennblatt 22 nach seitwärts. Diese Mulcharme 38 sind an ihren im Betrieb voreilenden Kanten 40 mit Schneiden 42 versehen.

Es ist zu beachten, dass die Schneidkanten 26 des Trennblattes 22 in üblicher Weise, das heißt von oben, angeschliffen sind, wobei die Schneiden 42 der Mulcharme in umgekehrter Weise, das heißt von unten angeschliffen sind.

Die Mulcharme 38 bzw. ihre voreilenden und sich im wesentlichen radial erstreckenden Kanten 40 schließen mit dem Trennblatt 22 bzw. mit dessen nacheilenden Kanten 27 einen Winkel B ein. Der Winkel B ist als ein spitzer Winkel vorgesehen, der vorzugsweise etwa 60° beträgt.

Die Mulcharme 38 sind darüber hinaus ausgehend von dem zentralen Bereich 32 entlang einer nur andeutungsweise dargestellten Biegekante 43 nach oben hin abgewinkelt. Es handelt sich hierbei vorzugsweise um eine leichte Abwinklung von etwa 10° bezogen auf die Horizontale bzw. den zentralen Bereich 32. Die Biegekante 43 ist derart gewählt, dass die Mulcharme 38 bezogen auf den zentralen Bereich von den die Schneiden 42 tragenden, voreilenden Kanten 40 aus geneigt sind.

Die Trennarme 37 hingegen sind ausgehend von dem zentralen Bereich 32 nach unten abgebogen bzw. abgekröpft, so dass zwischen dem zentralen Bereich 32 und den Schneidkanten 26 ein Freiraum entsteht.

Sowohl die Trennarme 37 als auch die Mulcharme 38 sind mit Verstärkungssicken 44 versehen, welche sich von dem zentralen Bereich 32 in Längsrichtung über die jeweiligen Arme (Trennarme 37 sowie Mulcharme 38) erstrecken und über diese in der Art von Auswölbungen hinausragen.

Die Mulcharme 37 sind derart dimensioniert, dass ihr Außendurchmesser nur ca. 75% der Schnittbreite der gesamten Trenneinrichtung 16 bzw. des Trennblattes 22 überdeckt.

## Patentansprüche

1. Trenneinrichtung (16), insbesondere für ein Mähgerät (10), mit einem länglichen Trennblatt (22) mit einem zentralen Bereich (32) und mit über diesen zentralen Bereich (32) hinausragenden Trennarmen (37), die an gegenüberliegenden Endbereichen wenigstens zwei Schneidkanten (26) aufweisen, wobei die Trenneinrichtung (16) derart in Rotation versetzbar ist, dass die Schneidkanten dem übrigen Trennblatt (22) vorauseilen, und mit wenigstens zwei länglich ausgebildeten Mulcharmen (38), welche sich von dem zentralen Bereich (32) der Trenneinrichtung (16) nach seitwärts erstrecken, wobei die Mulcharme (38) entlang einer zumindest im wesentlichen an den zentralen Bereich (32) angrenzenden Biegekante (43) nach oben abgewinkelt ausgebildet sind und einen kleineren Schneidkreis aufweisen als das Trennblatt (22),
**dadurch gekennzeichnet, dass**
die Mulcharmen (38) voreilende Kanten (40) aufweisen, welche mit dem Trennblatt (22) einen spitzen Winkel (8) einschließen und die Biegekanten (43) zumindest im wesentlichen senkrecht zu der jeweiligen vorauseilenden Kante angeordnet sind.

2. Trenneinrichtung nach Anspruch 1 oder 2, **dadurch gekennzeichnet, dass** die Mulcharme (38) mit dem zentralen Bereich (32) einen Winkel zwischen 5° und 25°, vorzugsweise aber von 10° einschließen.

3. Trenneinrichtung nach einem oder mehreren der vorherigen Ansprüche, **dadurch gekennzeichnet**, und die voreilenden Kanten (40) bei umlaufender Trenneinrichtung (16) die Oberfläche eines Konus bestimmen.

4. Trenneinrichtung nach einem oder mehreren der vorherigen Ansprüche, **dadurch gekennzeichnet, dass** die Mulcharme (38) an ihren im Betrieb voreilenden Kanten (40) mit Schneiden (42) versehen sind.

5. Trenneinrichtung nach Anspruch 4, **dadurch gekennzeichnet, dass** die Mulcharme (38) zur Erzeugung der Schneiden (42) von unten angeschliffen sind.

6. Trenneinrichtung nach einem oder mehreren der vorherigen Ansprüche, **dadurch gekennzeichnet, dass** die Mulcharme (38) mit dem Trennblatt einen spitzen Winkel (B) einschließen.

7. Trenneinrichtung nach einem oder mehreren der vorherigen Ansprüche, **dadurch gekennzeichnet, dass** der Winkel (B) zwischen 45° und 75°, vorzugsweise etwa 60° beträgt.

8. Trenneinrichtung nach einem oder mehreren der vorherigen Ansprüche, **dadurch gekennzeichnet, dass** die Trenneinrichtung (16) einteilig ausgebildet ist.

9. Trenneinrichtung nach einem oder mehreren der vorherigen Ansprüche, **dadurch gekennzeichnet, dass** die Trenneinrichtung (16) bzw. das Trennblatt und/oder die Mulcharme (38) mit sich vorzugsweise im wesentlichen in ihrer Längsrichtung erstreckenden Verstärkungssicken (44) versehen sind.

10. Trenneinrichtung nach einem oder mehreren der vorherigen Ansprüche, **dadurch gekennzeichnet**, das die Trenneinrichtung (16) zumindest im wesentlichen aus einem metallischen Werkstoff oder einem Kunststoff besteht.

11. Trenneinrichtung nach einem oder mehren der vorherigen Ansprüche, **dadurch gekennzeichnet, dass** das Trennblatt (22) und/oder die Mulcharme (38) mit Flügeln (30) versehen sind und/oder zumindest bereichsweise in der Art von Flügeln ausgebildet sind und/oder wirken können.

12. Trenneinrichtung nach einem oder mehreren der vorherige Ansprüche, **dadurch gekennzeichnet, dass** das Trennblatt (22) Trennarme (37) aufweist, welche zumindest bereichsweise bezogen auf den zentralen Bereich (32) nach unten abgewinkelt sind, bzw. dass sich die Schneidkanten (26) in einer unterhalb des zentralen Bereichs angeordneten Ebene erstrecken.

13. Trenneinrichtung nach einem oder mehreren der vorherigen Ansprüche, **dadurch gekennzeichnet, dass** die Schneidkanten mit der voreilenden Kante (24) des Trennblattes (22) als solches einen spitzen Winkel (A) einschließen.

14. Mähgerät oder Mähwerk mit wenigstens einer Trenneinrichtung (16) nach einem oder mehreren der vorherigen Ansprüche.

## Claims

1. Cutting device (16), in particular for a mower (10), with an elongate cutting blade (22) having a central region (32) and having cutting arms (37) which project over said central region (32) and have at least two knife edges (26) on opposite end regions, wherein the cutting device (16) can be rotated in such a manner that the knife edges are in front of the rest of the cutting blade (22), and with at least two mulching arms (38) which are of elongate design and extend sideways from the central region (32) of the cutting device (16), wherein the mulching arms (38) are angled upwards along a bending edge (43) which is at least substantially adjacent to the central region (32), and have a smaller cutting circle than the cutting blade (22), **characterized in that** the mulching arms (38) have leading edges (40) which enclose an acute angle (B) with the cutting blade (22), and the bending edges (43) are arranged at least substantially perpendicularly to the respective edge which is in front.

2. Cutting device according to Claim 1 or 2, **characterized in that** the mulching arms (38) enclose an angle of between 5° and 25°, but preferably of 10°, with the central region (32).

3. Cutting device according to one or more of the preceding claims, **characterized in that** the leading edges (40) define the surface of a cone when the cutting device (16) revolves.

4. Cutting device according to one or more of the preceding claims, **characterized in that** those edges (40) of the mulching arms (38) which lead during the operation are provided with cutting edges (42).

5. Cutting device according to Claim 4, **characterized in that** the mulching arms (38) are ground from below in order to produce the cutting edges (42).

6. Cutting device according to one or more of the preceding claims, **characterized in that** the mulching arms (38) enclose an acute angle (B) with the cutting blade.

7. Cutting device according to one or more of the preceding claims, **characterized in that** the angle (B) is between 45° and 75°, preferably approximately 60°.

8. Cutting device according to one or more of the preceding claims, **characterized in that** the cutting device (16) is of single-part design.

9. Cutting device according to one or more of the preceding claims, **characterized in that** the cutting device (16) or the cutting blade and/or the mulching arms (38) are provided with reinforcing beads (44) which preferably extend substantially in the longitudinal direction thereof.

10. Cutting device according to one or more of the preceding claims, **characterized in that** the cutting device (16) is at least substantially composed of a metallic material or a plastic.

11. Cutting device according to one or more of the preceding claims, **characterized in that** the cutting blade (22) and/or the mulching arms (38) are provided with wings (30) and/or are designed and/or can act in the manner of wings at least in some regions.

12. Cutting device according to one or more of the preceding claims, **characterized in that** the cutting blade (22) has cutting arms (37) which, at least in some regions, are angled downwards with respect to the central region (32), and/or the knife edges (26) extend in a plane arranged below the central region.

13. Cutting device according to one or more of the preceding claims, **characterized in that** the knife edges enclose an acute angle (A) with the leading edge (24) of the cutting blade (22) as such.

14. Mower or cutter with at least one cutting device (16) according to one or more of the preceding claims.

## Revendications

1. Dispositif de coupe (16), en particulier pour une faucheuse (10), comprenant une lame de coupe allongée (22) avec une région centrale (32) et des bras de coupe (37) saillant au-delà de cette région centrale (32), qui présentent, au niveau de régions d'extrémité opposées, au moins deux arêtes de coupe (26), le dispositif de coupe (16) pouvant être mis en rotation de telle sorte que les arêtes de coupe soient en avant du reste de la lame de coupe (22), et au moins deux bras de déchiquetage (38) réalisés sous forme allongée, qui s'étendent depuis la région centrale (32) du dispositif de coupe (16) vers le côté, les bras de déchiquetage (38) étant réalisés le long d'une arête de courbure (43) au moins substantiellement adjacente à la région centrale (32) avec un coude orienté vers le haut, et présentant un cercle de coupe plus court que la lame de coupe (22),
**caractérisé en ce que**
les bras de déchiquetage (38) présentent des arêtes (40) avancées, qui forment avec la lame de coupe (22) un angle aigu (8) et les arêtes de courbure (43) sont disposées au moins essentiellement perpendiculairement à l'arête respective avancée.

2. Dispositif de coupe selon la revendication 1 ou 2,
**caractérisé en ce que** les bras de déchiquetage (38) forment avec la région centrale (32) un angle compris entre 5° et 25°, de préférence toutefois de 10°.

3. Dispositif de coupe selon l'une quelconque ou plusieurs des revendications précédentes, **caractérisé en ce que** les arêtes avancées (40) définissent la surface d'un cône lorsque le dispositif de coupe (16) est entraîné en rotation.

4. Dispositif de coupe selon l'une quelconque ou plusieurs des revendications précédentes, **caractérisé en ce que** les bras de déchiquetage (38) sont pourvus de tranchants (42) sur leurs arêtes (40) avancées pendant le fonctionnement.

5. Dispositif de coupe selon la revendication 4, **caractérisé en ce que** les bras de déchiquetage (38) sont meulés par le dessous pour produire les tranchants (42).

6. Dispositif de coupe selon l'une quelconque ou plusieurs des revendications précédentes, **caractérisé en ce que** les bras de déchiquetage (38) forment avec la lame de coupe un angle aigu (B) .

7. Dispositif de coupe selon l'une quelconque ou plusieurs des revendications précédentes, **caractérisé en ce que** l'angle (B) est compris entre 45° et 75°, et vaut de préférence environ 60°.

8. Dispositif de coupe selon l'une quelconque ou plusieurs des revendications précédentes, **caractérisé en ce que** le dispositif de coupe (16) est réalisé d'une seule pièce.

9. Dispositif de coupe selon l'une quelconque ou plusieurs des revendications précédentes, **caractérisé en ce que** le dispositif de coupe (16) ou la lame de coupe et/ou les bras de déchiquetage (38) sont pourvus de moulures de renforcement (44) s'étendant de préférence essentiellement dans leur direction longitudinale.

10. Dispositif de coupe selon l'une quelconque ou plusieurs des revendications précédentes, **caractérisé en ce que** le dispositif de coupe (16) se compose au moins essentiellement d'un matériau métallique ou d'un plastique.

11. Dispositif de coupe selon l'une quelconque ou plusieurs des revendications précédentes, **caractérisé en ce que** la lame de coupe (22) et/ou les bras de déchiquetage (38) sont pourvus d'ailes (30) et/ou sont réalisés au moins en partie sous forme d'ailes et/ou peuvent agir au moins en partie en tant qu'ailes.

12. Dispositif de coupe selon l'une quelconque ou plusieurs des revendications précédentes, **caractérisé en ce que** la lame de coupe (22) présente des bras de coupe (37) qui sont coudés vers le bas au moins en partie par rapport à la région centrale (32), ou **en ce que** les arêtes de coupe (26) s'étendent dans un plan disposé sous la région centrale.

13. Dispositif de coupe selon l'une quelconque ou plusieurs des revendications précédentes, **caractérisé en ce que** les arêtes de coupe forment avec l'arête avancée (24) de la lame de coupe (22) en tant que telle un angle aigu (A).

14. Faucheuse ou dispositif de fauchage comprenant au moins un dispositif de coupe (16) selon l'une quelconque ou plusieurs des revendications précédentes.
